# EUROPEAN PATENT APPLICATION

(11) **EP 2 080 462 A1**
(43) Date of publication of application: **22.07.2009**
(21) Application number: 07816386.2
(22) Date of filing: 19.09.2007
(51) Int. Cl.: A47J 37/01, A21B 3/00

(54) **BREAD CASE USED IN BREAD MAKING MACHINE**

(30) Priority: 19.09.2006 CN 200620064586 U
(71) Applicant: Wang, Donglei, Xiangzhou District, Zhuhai, Guangdong 519085 (CN)
(72) Inventor: Wang, Donglei, Xiangzhou District, Zhuhai, Guangdong 519085 (CN)
(74) Representative: Mohun, Stephen John
(86) International application number: PCT/CN2007/002770
(87) International publication number: WO 2008/040174

(57) **Abstract**

A bread vessel used in a breadmaker comprises a separated upper part and lower part, the lower part comprises a bread vessel bottom (7), a blending rod (15) and a bread vessel support (8), the blending rod (15) is fixed on the bread vessel support (8) below the bread vessel bottom (7) and the blending rod (15) extends through the bread vessel bottom (7) to reach above the bread vessel bottom (7), wherein the upper part is detachably fixed on the lower part. Also a breadmaker equipped with the bread vessel of the present utility model is provided.

## Description

### FIELD OF THE UTILITY MODEL

The present utility model relates to a breadmaker, more particularly, to a bread vessel used in an automatic breadmaker.

### BACKGROUND OF THE UTILITY MODEL

With the development of people's daily life, domestic breadmakers are gradually adopted by families. By setting programme, the full-automatic breadmaker can automatically carry out the whole bread making process including making ingredients and dough, getting ferment and baking. When the bread is made ready, it is taken out of the bread vessel to be eaten. The bread vessel in a prior art automatic breadmaker mainly comprises a container integrally formed by a bread vessel body and a bread vessel bottom, a blending rod and a bread vessel support which is fixed below said bread vessel bottom; wherein said blending rod is fixed on the bread vessel support and extends through the bread vessel bottom to reach into said container. Before making bread, the bread vessel is stuck inside the breadmaker to get located therein; after making bread, the bread vessel is taken out of the breadmaker and turned upside down to enable the bread out. Because the toasted bread normally stuck with the blending rod, the bread can not be taken out easily which is not convenient in operation, and leavings are normally left on the bread vessel bottom which brings trouble in cleaning the bread vessel.

### SUMMARY OF THE UTILITY MODEL

The present utility model aims at solving problems caused by inconvenient operations of the bread vessel in the automatic breadmaker of prior art, by providing an easily cleaned bread vessel out of which bread can be easily taken.

The goal of the present utility model is achieved by the following technical scheme:

A bread vessel used in a breadmaker comprises a separated upper part and lower part, wherein said lower part comprises a bread vessel bottom, a blending rod and a bread vessel support, said blending rod is fixed on the bread vessel support below the bread vessel bottom and said blending rod extends through said bread vessel bottom to reach above the bread vessel bottom, wherein said upper part is detachably fixed on said lower part.

Wherein said upper part comprises a bread vessel body and a locking device which is fixed on the bread vessel body; both the upper end and the lower end of said bread vessel body are open, and a through seam is formed on a side wall of the bread vessel body, so that said bread vessel body can be fastened or released with said locking device.

Wherein said locking device comprises a lock rod, a latch handle, a first lock mounting member and a second lock mounting member; said first lock mounting member and said second lock mounting member are respectively fixed on two sides of the through seam, the latch handle is fixed on the second lock mounting member, the lock rod is fixed on the first lock mounting member and can be locked with the latch handle.

Wherein a clip is disposed respectively on the upper brim and/or the lower brim of the bread vessel body, which can slide respectively along said upper brim and/or said lower brim.

Wherein a peripheral rim of said bread vessel bottom is step-shaped, so that it is convenient to be put in and stuck within a lower brim of the bread vessel body.

Also the present utility model provides a breadmaker equipped with said bread vessel.

Because the bread vessel body and the bread vessel support are assembled in a detachable way according to the present utility model, with simple operations the bread can be taken out easily and the bread vessel can be cleaned easily, which is more humanized and time saving.

### BRIEF DESCRIPTION OF THE DRAWINGS

Further features and advantages of the present utility model will become apparent from the following embodiments, in combination with the appended drawings, in which:
Figure 1 is a schematic view showing the bread vessel of the present utility model being assembled;
Figure 2 is a schematic view showing the bread vessel of Figure 1 being detached;
Figure 3 is a cross-sectional view of the bread vessel as shown in Figure 1;
Figure 4 is a cross-sectional view of the breadmaker equipped with the bread vessel of Figure 3;
in which: 1 denotes a lock rod; 2 denotes a bread vessel body; 3 denotes a lock rivet; 4 denotes a first lock mounting member; 5 denotes a second lock mounting member; 6 denotes a latch handle; 7 denotes a bread vessel bottom; 8 denotes a bread vessel support; 9 denotes a spring leaf; 10 denotes a shifting fork; 11 denotes a two hole washer; 12 denotes a blending shaft; 13 denotes a rivet for bread vessel support; 14 denotes a handle; 15 denotes a blending rod; 16 denotes a sealing ring; 17 denotes a bolt; 18 denotes an oil seal; 19 denotes a split washer; 20 denotes a first adjusting washer; 21 denotes a second adjusting washer; 22 denotes a sleeve for bread vessel support; 23 denotes a top cover; 24 denotes a heating tube; 25 denotes a base; 26 denotes a gear; 27 denotes a nut; 28 denotes a first transmission shaft; 29 denotes a transmission shaft sleeve; 30 denotes a shifting fork head; 31 denotes a big belt pulley; 32 denotes a belt; 33 denotes a small belt pulley; 34 denotes a motor; 35 denotes a second transmission shaft; 36 denotes a clip.

### DETAILED DESCRIPTION OF THE PREFERRED EMBODIMENTS

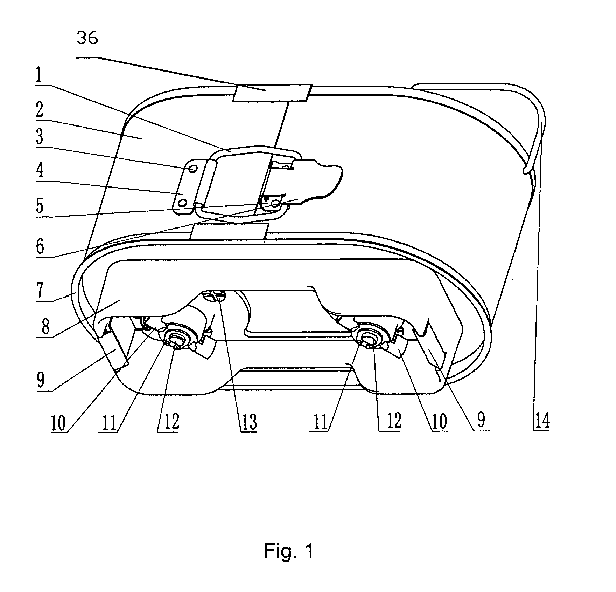

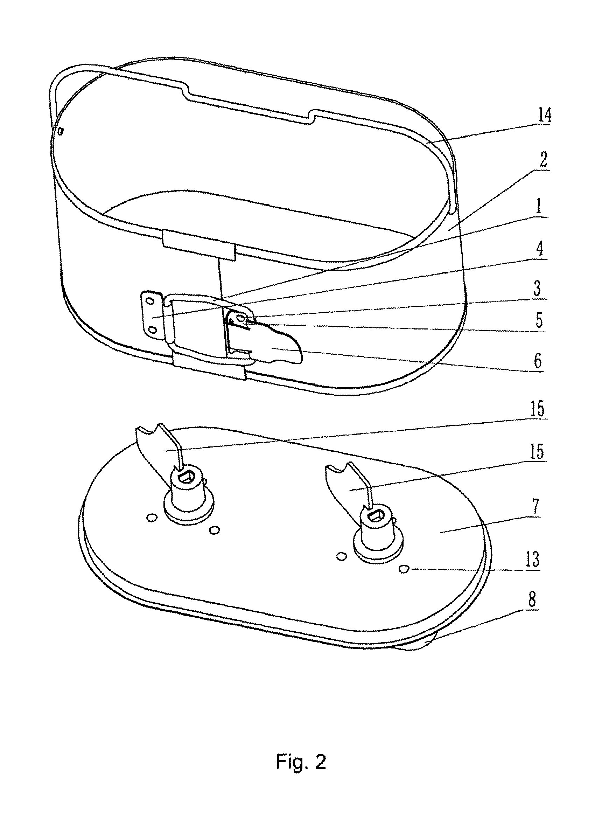

As illustrated in figures 1, 2 and 3, in one embodiment of the present utility model, the bread vessel comprises an upper part and a lower part which are combinable and detachable. The upper part comprises a bread vessel body 2, a handle 14 which is fixed on top of the bread vessel body 2 and a locking device which is fixed on a side wall of the bread vessel body 2. Both the upper end and the lower end of said bread vessel body 2 are open, and a through seam is formed on the side wall of the bread vessel body 2. Said locking device comprises a lock rod 1, a latch handle 6, a first lock mounting member 4 and a second lock mounting member 5. The first lock mounting member 4 and the second lock mounting member 5 are respectively fixed on two sides of the through seam, the latch handle 6 is fixed on the second lock mounting member 5, the lock rod 1 is fixed on the first lock mounting member 4 and can be locked with the latch handle 6. When the locking device is locked, to ensure a better engagement of the through seam, clips 36 are disposed respectively on the upper brim and the lower brim of the bread vessel body 2, which can slide respectively along the upper brim and the lower brim.

The lower part comprises a bread vessel bottom 7, a blending rod 15 and a bread vessel support 8 which is fixed below the bread vessel bottom 7. The blending rod 15 is fixed on the bread vessel support 8 and extends through the bread vessel bottom 7 to reach above the bread vessel bottom. The peripheral rim of said bread vessel bottom 7 is step-shaped, so that it is convenient to be put in and stuck within the lower brim of the bread vessel body 2. In order to hold bread ingredients, said bread vessel bottom 7 can be shaped with its center area depressed downwardly.

Before making bread, the latch handle 6 of the locking device is turned to one side of the bread vessel body 2 so that the locking device is locked and the through seam on the side wall of the bread vessel body 2 is engaged, the clips 36 are slid to cover the junctions of the through seam. After that the bread vessel bottom 7 is put in and stuck within the lower brim of the bread vessel body 2 to form an assembled breadmaker.

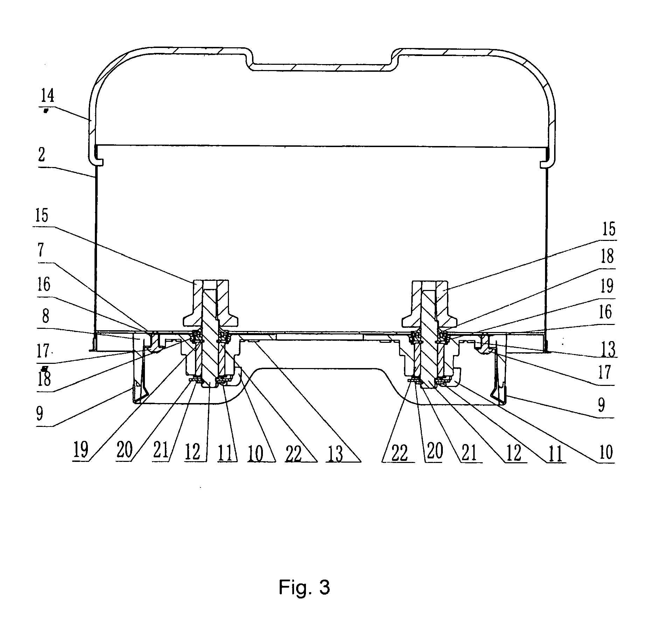

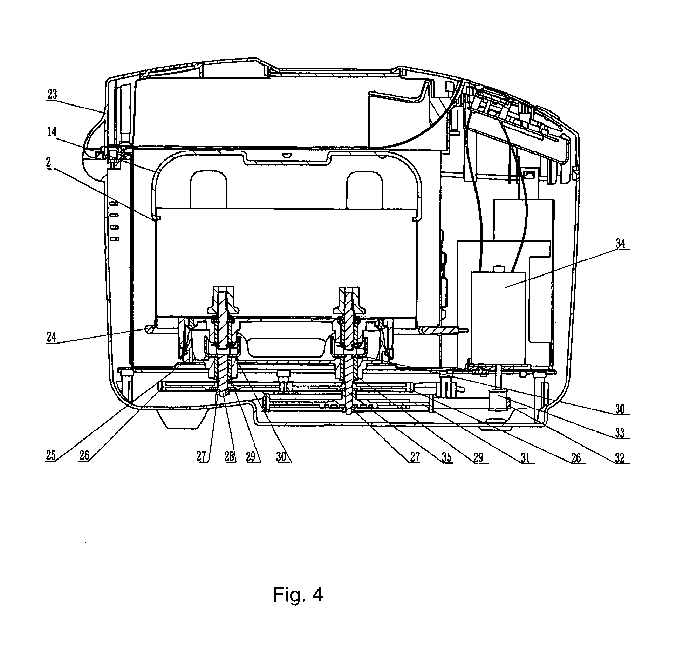

As illustrated in figure 4, the bread vessel of the present utility model is suitable to be used in automatic breadmaker with the following installation procedures: the bread vessel of the present utility model is assembled integrally as illustrated in figures 1 and 3, the top cover 23 of the breadmaker is opened, with a certain force the bread vessel support 8 is pressed down to the base 25 of the breadmaker so that the bread vessel gets located and fastened by the interactional forces from the bread vessel support 8, the base 25 and the spring leaf 9, then the top cover 23 is closed. When not using the breadmaker, the top cover 23 is opened and the handle 14 is pulled out upwardly with a certain force, accordingly the bread vessel is detached away from the base 25 and the bread vessel is taken out of the breadmaker. Then the latch handle 6 of the locking device is turned to the other side of the bread vessel body 2 so that the locking device is unlocked and the through seam on the side wall of the bread vessel body 2 is released, accordingly the bread vessel body 2 is detached away from the bread vessel bottom7. As a result, the ready bread can be taken out easily and the bread vessel bottom 7 can be cleaned easily.

The above descriptions and illustrations should not be construed as limiting the scope of the present utility model, which is defined by the appended claims. Various modifications, alternative constructions and equivalents made by technicians of the field may be employed without departing from the true spirit and scope of the present utility model.

## Claims

1. A bread vessel used in a breadmaker, comprising a separated upper part and lower part, wherein the lower part comprises a bread vessel bottom, a blending rod and a bread vessel support, the blending rod is fixed on the bread vessel support below the bread vessel bottom and the blending rod extends through the bread vessel bottom to reach above the bread vessel bottom, wherein the upper part is detachably fixed on the lower part.

2. The bread vessel according to claim 1, wherein said upper part comprises a bread vessel body and a locking device which is fixed on the bread vessel body; both the upper end and the lower end of the bread vessel body are open, and a through seam is formed on a side wall of the bread vessel body, so that the bread vessel body can be fastened or released with the locking device.

3. The bread vessel according to claim 2, wherein said locking device comprises a lock rod, a latch handle, a first lock mounting member and a second lock mounting member; the first lock mounting member and the second lock mounting member are respectively fixed on two sides of the through seam, the latch handle is fixed on the second lock mounting member, the lock rod is fixed on the first lock mounting member and can be locked with the latch handle.

4. The bread vessel according to claim 2, wherein a clip is disposed respectively on the upper brim and/or the lower brim of the bread vessel body, which can slide respectively along the upper brim and/or the lower brim.

5. The bread vessel according to claim 3, wherein a clip is disposed respectively on the upper brim and/or the lower brim of the bread vessel body, which can slide respectively along the upper brim and/or the lower brim.

6. The bread vessel according to claim 2, wherein a peripheral rim of the bread vessel bottom is step-shaped, so that it is convenient to be put in and stuck within a lower brim of the bread vessel body.

7. The bread vessel according to claim 3, wherein a peripheral rim of the bread vessel bottom is step-shaped, so that it is convenient to be put in and stuck within a lower brim of the bread vessel body.

8. A breadmaker, comprising the bread vessel as defined in any one of claims 1 to 7.
